# EUROPÄISCHE PATENTANMELDUNG

(11) **EP 4 345 729 A1**
(43) Veröffentlichungstag der Anmeldung: **03.04.2024**
(21) Anmeldenummer: 23020449.7
(22) Anmeldetag: 27.09.2023
(51) Int. Cl.: G06Q 40/08

(54) **VERFAHREN ZUR BEARBEITUNG UND ÜBERWACHUNG VON KRAFTFAHRZEUG-SCHADENFÄLLEN**

(30) Priorität: 28.09.2022 DE 102022125059
(71) Anmelder: Hoffmann, Frank, 04229 Leipzig (DE)
(72) Erfinder: Hoffmann, Frank, 04229 Leipzig (DE)
(74) Vertreter: Völger, Karl Wolfgang

(57) **Zusammenfassung**

Die vorliegende Erfindung bezieht sich auf ein Verfahren zur Bearbeitung und Überwachung von Kraftfahrzeug-Schadenfällen, umfassend die Schritte
a) Annehmen eines technischen Gutachtens zu einem an einem beschädigten Kraftfahrzeug vorliegenden Schaden in Verbindung mit einem Auftraggeber,
b) Annehmen eines Kostenvoranschlags zu dem an dem beschädigten Kraftfahrzeug vorliegenden Schaden in Verbindung mit einem Auftraggeber,
c) Umwandeln der Daten des technischen Gutachtens und des Kostenvoranschlags in ein maschinenlesbares Format und damit Erzeugen von maschinenlesbaren Daten, wobei zumindest die Fahrzeugidentifikationsnummer und/oder personenbezogene Daten in diesem Schritt nicht dauerhaft gespeichert werden,
d) automatisiertes Abfragen der fahrzeugspezifischen Daten mittels der Fahrzeugidentifikationsnummer bei einer Datenbank des Herstellers des beschädigten Kraftfahrzeugs oder bei einem von diesem Hersteller autorisierten Anbieter und Erhalten von dessen fahrzeugspezifischen Daten,
e) automatisiertes Ausgeben zumindest eines Teils der maschinenlesbaren Daten und der fahrzeugspezifischen Daten an eine Anspruchsüberwachung,
f) Übergeben der fahrzeugspezifischen Daten sowie zumindest eines Teils der maschinenlesbaren Daten des beschädigten Kraftfahrzeugs an eine Fahrzeugbewertung und Erhalten einer fahrzeugspezifischen Bewertung,
g) Übergeben der fahrzeugspezifischen Bewertung sowie zumindest eines Teils der maschinenlesbaren Daten des beschädigten Kraftfahrzeugs an einen Vorgangscode-Generator,
h) Erzeugen eines fahrzeugspezifischen Vorgangscodes für das beschädigte Kraftfahrzeug und unverzügliches endgültiges Löschen der Fahrzeugidentifikationsnummer,
i) Übergeben des fahrzeugspezifischen Vorgangscodes an die Betrugsüberwachung und Abgleichen mit dort bereits abgelegten Vorgangscodes auf Übereinstimmung,
j) Ausgeben des fahrzeugspezifischen Vorgangscodes einschließlich Abgleich desselben von der Betrugsüberwachung an die Anspruchsüberwachung und ein dortiges Verknüpfen mit den in Schritt e) empfangenen maschinenlesbaren Daten,
k) Ausgeben der in Schritt j) erhaltenen Verknüpfung und Hinweis auf eventuell weitere unter diesem Vorgangscode bekannte Schadenereignisse an den Auftraggeber.

## Beschreibung

Die vorliegende Erfindung betrifft ein Verfahren zur Bearbeitung und Überwachung von Kraftfahrzeug-Schadenfällen.

Verkehrsunfälle mit Kraftfahrzeugen geschehen täglich, sind aber in sehr vielen Fällen auf reine Sachschäden begrenzt. Nach einem Verkehrsunfall (oder einem sonstigen Kraftfahrzeug-Schadenfall) ist es für Reparaturwerkstätten, Versicherungen und Schadengutachter notwendig, eine möglichst genaue Schätzung des verursachten Schadens an dem betroffenen Kraftfahrzeug zu erhalten. Dabei ist es wichtig, eine effiziente und genaue Schätzung des Schadens zu ermitteln, einschließlich der Zeit und/oder der Kosten für die Reparatur des Schadens am Kraftfahrzeug.

Die beteiligten Versicherungen sind daran interessiert, die Kraftfahrzeug-Schadenfälle korrekt und kosteneffizient abzuwickeln. Dabei ist Sorge zu tragen, dass ein Kraftfahrzeug-Schadenfall nicht ein weiteres Mal geltend gemacht wird, beispielsweise, weil der Schaden dem Versicherungsnehmer zwar erstattet wurde, dieser den Schaden aber nicht oder nur teilweise hat reparieren lassen. Durch solche betrügerischen Vorgehensweisen entstehen den Versicherungen hohe Schäden, die sich u.a. in erhöhten Prämien auch für die ehrlichen Versicherungsnehmer niederschlagen.

Aus dem Stand der Technik sind Ansätze bekannt, um Kraftfahrzeug-Schadenfälle effizient zu erfassen und zu verarbeiten. So beschreibt etwa EP 3 789 936 A1 eine Vorgehensweise, um eine Schätzung des Kollisionsschadens an einem Auto zu ermitteln. Dazu wird ein Karosserieteil des Autos in einer Benutzerschnittstelle angezeigt. Über diese werden Eingaben des Benutzers empfangen, um auf dem Karosserieteil einen oder mehrere beschädigte Bereiche zu zeichnen. Konkret werden die Schadstellen jeweils durch einen Umriss der Schadstellen definiert, der mittels eines Zeichenwerkzeugs auf das Karosserieteil gezeichnet oder aus einem Bild erkannt wird. Anschließend wird für den Benutzer eine Schätzung der Reparaturkosten und der Reparaturzeit auf der Grundlage des auf dem Karosserieteil gezeichneten Schadenbereichs erstellt. Dies soll eine effiziente, flexible und genaue Definition und Schätzung von Kollisionsschäden an einem Fahrzeug ermöglichen.

Solche Vorgehensweisen können jedoch nicht ausschließen, dass es zu einer erneuten Geltendmachung eines bereits bearbeiteten Schadens kommt. Zudem ist es aus Datenschutzgründen nicht möglich, das beschädigte Fahrzeug mit allen Daten über die Dauer der Bearbeitung und Reparatur hinaus erfasst zu halten.

Es besteht folglich der Bedarf an einem Verfahren, um Kraftfahrzeug-Schadenfälle zuverlässig zu bearbeiten und zu überwachen. Dabei soll die Möglichkeit gegeben sein, datenschutzkonform ein einmal beschädigtes und instandgesetztes Kraftfahrzeug erfasst zu halten, um einen erneuten identischen oder teilidentischen Schadenfall aufdecken zu können.

Der vorliegenden Erfindung liegt daher die Aufgabe zugrunde, ein Verfahren zur Bearbeitung und Überwachung von Kraftfahrzeug-Schadenfällen anzugeben, welches die Nachteile des Standes der Technik überwindet und eine datenschutzkonforme und zuverlässige Bearbeitung ermöglicht.

Diese Aufgabe wird in der vorliegenden Erfindung durch ein Verfahren zur Bearbeitung und Überwachung von Kraftfahrzeug-Schadenfällen gelöst, das die Schritte umfasst
a) Annehmen eines technischen Gutachtens zu einem an einem beschädigten Kraftfahrzeug vorliegenden Schaden in Verbindung mit einem Auftraggeber,
b) Annehmen eines Kostenvoranschlags zu dem an dem beschädigten Kraftfahrzeug vorliegenden Schaden in Verbindung mit einem Auftraggeber,
   wobei zumindest eines der beiden Dokumente technisches Gutachten und Kostenvoranschlag die Fahrzeugidentifikationsnummer des beschädigten Kraftfahrzeugs enthält,
c) Umwandeln der Daten des technischen Gutachtens und des Kostenvoranschlags in ein maschinenlesbares Format und damit Erzeugen von maschinenlesbaren Daten, wobei zumindest die Fahrzeugidentifikationsnummer und/oder personenbezogene Daten in diesem Schritt nicht dauerhaft gespeichert werden,
d) automatisiertes Abfragen der fahrzeugspezifischen Daten mittels der Fahrzeugidentifikationsnummer bei einer Datenbank des Herstellers des beschädigten Kraftfahrzeugs oder bei einem von diesem Hersteller autorisierten Anbieter und Erhalten von dessen fahrzeugspezifischen Daten,
e) automatisiertes Ausgeben zumindest eines Teils der maschinenlesbaren Daten und der fahrzeugspezifischen Daten an eine Anspruchsüberwachung,
f) Übergeben der fahrzeugspezifischen Daten sowie zumindest eines Teils der maschinenlesbaren Daten des beschädigten Kraftfahrzeugs an eine Fahrzeugbewertung und Erhalten einer fahrzeugspezifischen Bewertung,
g) Übergeben der fahrzeugspezifischen Bewertung sowie zumindest eines Teils der maschinenlesbaren Daten des beschädigten Kraftfahrzeugs an einen Vorgangscode-Generator,
h) Erzeugen eines fahrzeugspezifischen Vorgangscodes für das beschädigte Kraftfahrzeug und unverzügliches endgültiges Löschen der Fahrzeugidentifikationsnummer,
i) Übergeben des fahrzeugspezifischen Vorgangscodes an die Betrugsüberwachung und Abgleichen mit dort bereits abgelegten Vorgangscodes auf Übereinstimmung,
j) Ausgeben des fahrzeugspezifischen Vorgangscodes einschließlich Abgleich desselben von der Betrugsüberwachung an die Anspruchsüberwachung und ein dortiges Verknüpfen mit den in Schritt d) empfangenen maschinenlesbaren Daten
k) Ausgeben der in Schritt j) erhaltenen Verknüpfung und Hinweis auf eventuell weitere unter diesem Vorgangscode bekannte Schadenereignisse an den Auftraggeber.

Mit "Fahrzeugidentifikationsnummer" (abgekürzt FIN, engl. vehicle identification number, VIN) wird die 17-stellige Nummer bezeichnet, mit der sich jedes Kraftfahrzeug eindeutig identifizieren lässt. Die Fahrzeugidentifikationsnummer wird heute von allen Herstellern eingesetzt und ersetzt seit 1981 die Fahrgestellnummer.

Der Begriff "maschinenlesbares Format" bezeichnet im Sinne der vorliegenden Erfindung das Ergebnis einer Umwandlung von strukturierten Daten oder von durch eine automatische Texterkennung (OCR) nachstrukturierten Daten einer Vorlage (z.B. pdf) oder eines eingescannten Papierformats in eine XML-ISTA-Struktur.

Mit "Anspruchsüberwachung" (engl. "ClaimsGuard") wird ein frei konfigurierbarer, logikbasierter Regelalgorithmus bezeichnet, während "Betrugsüberwachung" (engl. "FraudGuard") im Sinne der Erfindung prinzipiell eine sehr detaillierte und umfassende Datenbank von Schadenfällen darstellt.

Mit dem Begriff "Fahrzeugbewertung" ist eine Online-Dienstleistung eines entsprechenden Anbieters (z.B. DAT) gemeint.

Der "fahrzeugspezifische Vorgangscode", der erfindungsgemäß erzeugt wird, stellt einen abstrakten Code aus Ziffern und ggf. Lettern dar, in dem alle Angaben des beschädigten Kraftfahrzeugs (Ausstattung, Baujahr etc.) eindeutig aufgenommen sind.

Diese Erstellung des Vorgangscodes folgt immer dem gleichen Muster bezüglich der Abfolge der abstrakten Ziffern und ggf. Lettern hinsichtlich der Angaben des beschädigten Kraftfahrzeugs, beispielsweise die erste Ziffer für das Baujahr, die zweite Ziffer für die Ausstattung, etc., wobei die tatsächliche Abfolge ist als solche nicht vorgegeben ist.

Die "maschinenlesbaren Daten" des beschädigten Kraftfahrzeugs in Schritt e) können die Reparaturkosten, erneuerte Bauteile, die Instandsetzungspositionen, die Lackierpositionen und das Lackmaterial, den Tag der Erstzulassung, das Fahrzeugalter, die Laufleistung, die restrukturierte bzw. strukturierte Fahrzeugausstattung, den Schadentag, das Auftragsdatum des Auftraggebers sowie eine Kennung des Auftraggebers umfassen.

Der "Teil der maschinenlesbaren Daten" des beschädigten Kraftfahrzeugs aus Schritt f) kann insbesondere den Tag der Erstzulassung, die Laufleistung sowie den Schadentag umfassen.

Für die Schritte a) und b) wird von einem Auftraggeber ein Auftrag beispielsweise unstrukturiert (Papier, PDF, etc.) zusammen mit einem Gutachten oder Kostenvoranschlag (Format ggf. unstrukturiert) sowie Kenndaten in Verbindung mit dem Auftraggeber (z.B. Name, Adresse des Auftraggebers, Schadentag, Schadennummer bzw. Auftragsnummer, etc.) entgegengenommen.

Schritt c) dient insbesondere dazu, den meist unstrukturierten Auftrag, d.h. unstrukturierte Formate, zu restrukturieren und einen strukturierten Datensatz zu erstellen.

Die vorliegende Erfindung hat den Vorteil, dass durch das Erzeugen des fahrzeugspezifischen Vorgangscodes ein anonymisiertes Mittel geschaffen wird, um ein Kraftfahrzeug zwar eindeutig zu identifizieren, jedoch ohne dass konkrete Rückschlüsse auf den Halter oder das Fahrzeug gezogen werden können. Nicht einmal für einen Auftraggeber oder den IT-Dienstleister sind Rückschlüsse aus dem fahrzeugspezifischen Vorgangscode möglich. Auf diese datenschutzkonforme Weise ist es möglich, Vorschäden und deren Regulierung eindeutig zu erkennen und dies dem Auftraggeber mitzuteilen. Ein Missbrauch von Versicherungsleistungen kann somit weitestgehend verhindert werden.

Das erfindungsgemäße Verfahren ist insbesondere ein computerimplementiertes Verfahren, das technische Eingangsdaten aus den Schritten a) und b) in den Schritten c) bis h) rechnergestützt verarbeitet und in den Schritten i) bis k) technische Ausgangsdaten ausgibt.

Bei den technischen Eingangsdaten handelt es sich um das technische Gutachten zu einem an einem beschädigten Kraftfahrzeug vorliegenden Schaden in Verbindung mit einem Auftraggeber und um den Kostenvoranschlag zu dem an dem beschädigten Kraftfahrzeug vorliegenden Schaden in Verbindung mit einem Auftraggeber, wobei zumindest eines der beiden Dokumente technisches Gutachten und Kostenvoranschlag die Fahrzeugidentifikationsnummer des beschädigten Kraftfahrzeugs enthält.

Die "technischen Ausgangsdaten" sind insbesondere computerimplementiert neu erstellte Daten in Form des erfindungsgemäßen fahrzeugspezifischen Vorgangscodes, den vorstehend schon beschriebenen technischen Effekt erzeugt, in datenschutzkonformer Weise ein anonymisiertes Mittel zu schaffen, um ein Kraftfahrzeug zwar eindeutig jedoch ohne dass konkrete Rückschlüsse auf den Halter oder das Fahrzeug zu identifizieren. Der fahrzeugspezifische Vorgangscode stellt dabei bei bestimmungsgemäßem Gebrauch die realen technischen Effekte bereit, dass Vorschäden an einem Fahrzeug identifiziert werden können, um einen Missbrauch von Versicherungsleistungen weitestgehend zu verhindern.

Eine bevorzugte Ausführungsform sieht vor, dass das Verfahren ferner parallel zu Schritt g) Erzeugen eines monetären Ergebnisses der Fahrzeugbewertung und direktes Übergeben an die Betrugsüberwachung umfasst.

Mit dieser Ausführungsform kann der Betrugsüberwachung ein von dem aktuellen Schaden unabhängiges monetäres Ergebnis zur Verfügung gestellt werden, das auf der Fahrzeugbewertung ohne den eingetretenen Schaden beruht.

In einer Weiterbildung des erfindungsgemäßen Verfahrens weist dieses ferner einen oder mehrere der Schritte auf
l) Erzeugen einer Schadenmatrix in Verbindung mit dem fahrzeugspezifischen Vorgangscode und den in Schritt e) empfangenen maschinenlesbaren Daten in Verbindung mit einem Auftraggeber durch die Anspruchsüberwachung und Ausgeben der Schadenmatrix an die Betrugsüberwachung,
m) Vergleich der kalkulierten Ausstattungsvarianten im Gutachten oder im Kostenvoranschlag mit den die Ausstattungsvarianten betreffenden fahrzeugspezifischen Daten der Abfrage der Fahrzeugidentifikationsnummer, um ggf. bei auftretenden Abweichungen eine Korrektur zum Fahrzeugwert vornehmen zu können,
n) Vergleichen der für den fahrzeugspezifischen Vorgangscode erzeugten Schadenmatrix in der Anspruchsüberwachung mit gegebenenfalls für diesen fahrzeugspezifischen Vorgangscode bereits vorhandenen Schadenmatrices und Ausgeben des Vergleichsergebnisses an die Betrugsüberwachung.

Die erfindungsgemäß erzeugte "Schadenmatrix" stellt eine plastische Darstellung des Erfassens beschädigter Karosserieteile und ausgewählter beschädigter Anbauteile für den aktuellen Fall dar. Diese beschädigten Teile werden gemäß dem kalkulierten Reparaturweg als erneuerte, instandgesetzte oder lackierte Bauteile in die Matrix übernommen und mit den beschädigten Teilen eines ggf. vorherigen Schadenereignisses am selben Fahrzeug anhand der damaligen Schadenmatrix miteinander verglichen.

Im Schritt m) werden die kalkulierten Ausstattungsvarianten des Gutachtens oder des Kostenvoranschlags mit den Ausstattungsvarianten der Abfrage der Fahrzeugidentifikationsnummer (kurz: "VIN-Abfrage") verglichen und im Fall einer Abweichung Korrekturen am Fahrzeugwert vorgenommen.

Im Schritt n) wird ein merkantiler Minderwert ermittelt, falls eine entsprechende Schadenmatrix eines Vorschadens vorliegt. Liegt ein merkantiler Minderwert vor, wird dieser vom dem Fahrzeugwert subtrahiert, der durch automatisiertes Abfragen aus einer Datenbank festgestellt wurde. Sollte das Verhältnis der Reparaturkosten zum Fahrzeugwert ein zu definierendes Verhältnis überschreiten, würde eine Totalschadenbeurteilung erfolgen. Auch diese Ergebnisse werden an die Betrugsüberwachung gesendet.

In einer bevorzugten Ausführungsform weist der fahrzeugspezifische Vorgangscode zumindest die letzten drei Ziffern / Stellen der Fahrzeugidentifikationsnummer auf.

Bei weitgehend identischen Fahrzeugen, beispielsweise in einer Fahrzeugflotte, das heißt, bei Fahrzeugen die am gleichen Tag zugelassen werden, welche die gleiche Ausstattung besitzen und welche die gleichen Motorvarianten etc. aufweisen, ist es theoretisch möglich, dass ein fahrzeugspezifischer Vorgangscode erzeugt wird, der mit einem Vorgangscode eines der anderen dieser Flottenfahrzeuge identisch ist. Durch die Übernahme der letzten drei Ziffern / Stellen der Fahrzeugidentifikationsnummer wird nun ein eindeutigerer fahrzeugspezifischer Vorgangscode erzeugt.

Bevorzugt weist der fahrzeugspezifische Vorgangscode zumindest die letzten vier Ziffern / Stellen der Fahrzeugidentifikationsnummer auf.

In einer ganz speziellen Weiterbildung dieser Ausführungsform können bis zu sieben Ziffern / Stellen am Ende der Fahrzeugidentifikationsnummer in den fahrzeugspezifischen Vorgangscode übernommen werden, um diesen eineindeutig zu gestalten.

Es hat sich als vorteilhaft erwiesen, wenn in Schritt e) der Teil der maschinenlesbaren Daten eine oder mehrere Kalkulationsdaten umfasst, ausgewählt aus Schadentag, Tag der Erstzulassung des beschädigten Kraftfahrzeugs, Laufleistung des beschädigten Kraftfahrzeugs, Kenndaten des Auftraggebers Reparaturkosten für das beschädigte Kraftfahrzeug.

Durch Einbeziehen dieser Kalkulationsdaten wird der Abgleich zuverlässig durchgeführt.

In dieser vorteilhaften Weiterbindung können besonders bevorzugt weitere Kalkulationsdaten umfasst sein ausgewählt aus erneuerten Bauteilen, Instandsetzungspositionen, Lackierpositionen, Lackmaterial, Fahrzeugausstattung.

In einer anderen Weiterbildung des erfindungsgemäßen Verfahrens werden in Schritt d) beim automatisierten Abfragen der Fahrzeugidentifikationsnummer eine oder mehrere Angaben erhalten, ausgewählt aus Fahrzeugtyp, Fahrzeugfarbe und -lackierung, Produktionszeitraum, Produktionsort, Ausstattungsvarianten, Neupreis, Hubraum, Motorleistung und diese Angaben in Schritt g) übergeben. Der Tag der Erstzulassung wird aus dem System ISTA-XML bereitgestellt.

Es hat sich für die Bearbeitung des Schadenfalls als vorteilhaft herausgestellt, wenn in Schritt n) beim Erzeugen der Schadenmatrix Informationen hinsichtlich des Beschädigungsgrades an dem beschädigten Kraftfahrzeug und der Vorgangscode verarbeitet werden sowie optional eine Fahrzeugbewertung und eine Totalschadenbeurteilung vorgenommen werden, wonach ein Vergleich der in allen Schadenmatrices auftretenden Schadenbereiche in der Anspruchsüberwachung erfolgt und somit eine Ermittlung eines Überdeckungsgrads mit eventuell vorhandenen Vorschäden vorgenommen wird, wobei im Fall von vorhandenen Vorschäden auch der Betrag eines merkantilen Minderwertes ermittelt wird.

Durch diesen Schritt kann der aktuelle Schaden am beschädigten Kraftfahrzeug mit eventuell vorhandenen früheren Schäden am Fahrzeug mit dem gleichen fahrzeugspezifischen Vorgangscode in einfacher Weise abgeglichen werden. Somit können Alt- bzw. Vorschäden am beschädigten Kraftfahrzeug erkannt werden. Es wird auch eine finale Fahrzeugbewertung und eine Totalschadenbeurteilung vorgenommen.

In einer speziellen Ausführungsform umfasst das erfindungsgemäße Verfahren ferner den Schritt o) Ausgeben eines digitalen Informationsberichts zum aktuellen Schadenfall für das beschädigte Kraftfahrzeug, wobei die Auswertung zumindest Informationen zu eventuellen früheren Schadenfällen des beschädigten Kraftfahrzeugs in Verbindung mit einem Auftraggeber enthalten und im Falle des Vorliegens solcher früherer Schadenfälle der jeweilige Überdeckungsgrad zum aktuellen Schadenbild angeführt wird.

In einer konkreten Weiterbildung dieser Ausführungsform kann in Schritt o) die Auswertung ferner Informationen zur Laufleistung des beschädigten Kraftfahrzeugs zum Zeitpunkt der Altschäden und/oder Vorschäden enthalten, wobei optional eine Fahrzeugbewertung des beschädigten Kraftfahrzeugs unter Einberechnung eines eventuellen Minderwerts aufgrund eventuell vorhandener Vorschäden und/oder eine prozentuale Angabe der Reparaturkosten zum aktuellen Wert des beschädigten Kraftfahrzeugs und eine Totalschadenbeurteilung vorgenommen wird.

Eine weitere Ausführungsform sieht vor, dass in Schritt n) die Auswertung ferner Informationen zur Laufleistung des beschädigten Kraftfahrzeugs zum Zeitpunkt der Altschäden und/oder Vorschäden enthält, wobei optional eine Fahrzeugbewertung des beschädigten Kraftfahrzeugs unter Einberechnung eines eventuellen Minderwerts aufgrund eventuell vorhandener Vorschäden und/oder eine prozentuale Angabe der Reparaturkosten zum aktuellen Wert des beschädigten Kraftfahrzeugs und eine Totalschadenbeurteilung vorgenommen wird.

Es ist in einer erfindungsgemäßen Weiterbildung des Verfahrens ferner Schritt p) vorgesehen, Erfassen von einem oder mehreren Lichtbildern eines visuellen Schadenbereichs des beschädigten Kraftfahrzeugs mittels einer Bilderkennungseinheit und Übermitteln eines digitalisierten Schadenbereichs an die Anspruchsüberwachung, wobei die einen oder mehreren Lichtbilder und/oder personenbezogene Daten in diesem Schritt nicht dauerhaft gespeichert werden, wobei in der Anspruchsüberwachung die durch die Bilderkennungseinheit erkannten Schäden am beschädigten Kraftfahrzeug mit den in der Kalkulation hinterlegten Schäden verglichen werden und somit das in der Kalkulation angegebene Schadenbild besser (oder optimaler) verifiziert werden kann.

Durch die Bilderkennung wird der in Schritt e) interpretierte Schadenbereich plausibilisiert und somit ein exakteres Ergebnis erzielt.

Weitere Ziele, Merkmale, Vorteile und Anwendungsmöglichkeiten ergeben sich aus der nachfolgenden Beschreibung von, die Erfindung nicht einschränkenden Ausführungsbeispielen, anhand der Figur. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Fig. 1:: ein schematisches Fließschema des erfindungsgemäßen Verfahrens und
- Fig. 2:: ein schematisches Fließschema der Weiterverarbeitung beim Versicherer,
- Fig. 3: das in Fig. 1 gezeigte Fließschema als vergrößerter erster Teil,
- Fig. 4: das in Fig. 1 gezeigte Fließschema als vergrößerter zweiter Teil,
- Fig. 5: das in Fig. 2 gezeigte Fließschema als vergrößerter dritter Teil,
- Fig. 6: das in Fig. 2 gezeigte Fließschema als vergrößerter vierter Teil,
- Fig. 7: ein Schema zum korrekten Zusammensetzen der Fig. 3 - 6
- Fig. 8: der erste, obere Teil der Tabelle 1 mit Schadenmatrices der Fälle BMW 540D 1, BMW 540D 2 und BMW 540D 3,
- Fig. 9: der zweite, untere Teil der Tabelle 1 mit Schadenmatrices der Fälle BMW 540D 1, BMW 540D 2 und BMW 540D 3,
- Fig. 10: eine Auswertung der Tabelle 1 als Tabelle 2
- Fig. 11: ein beispielhafterer Prüfbericht.

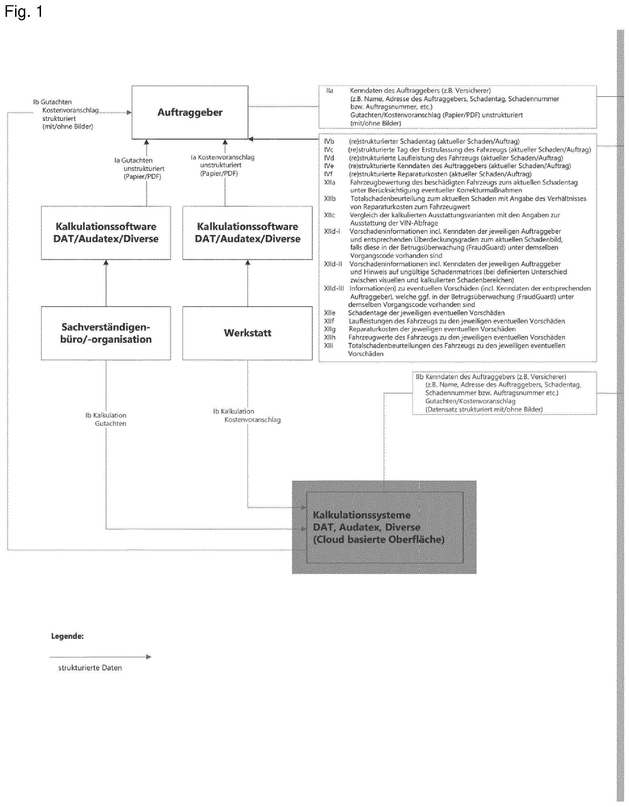

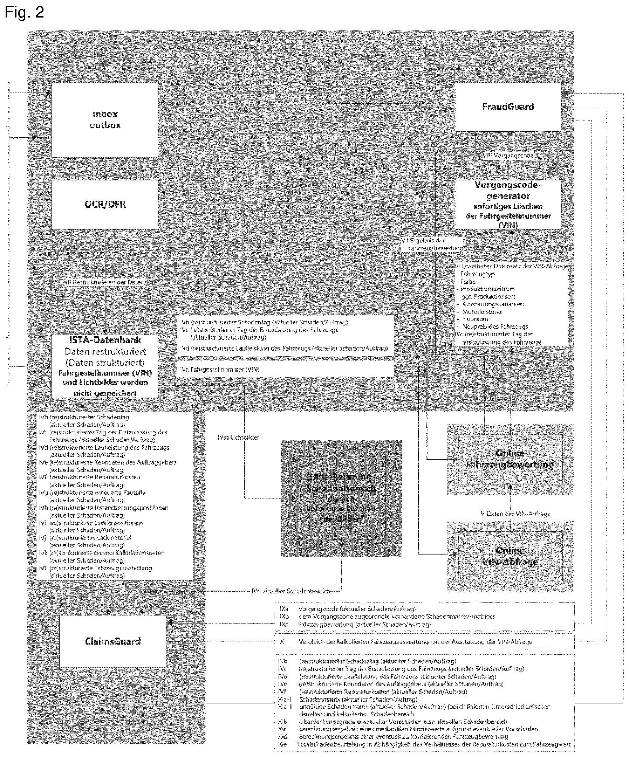

Die Figuren 1 und 2 ergeben zusammen ein vollständiges Fließschema, wobei sich Figur 2 links an die Figur 1 anschließt. Das erfindungsgemäße Verfahren und die Weiterverarbeitung beim Versicherer ergeben sich im Detail aus der nachstehenden Beschreibung, welche eine die vorliegende Erfindung nicht beschränkende Ausführungsform darstellt.

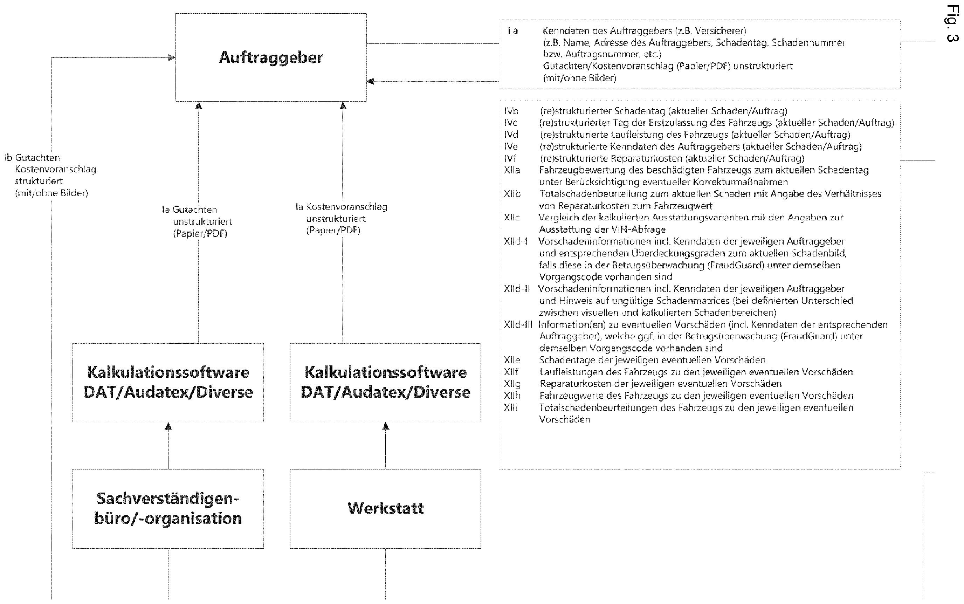

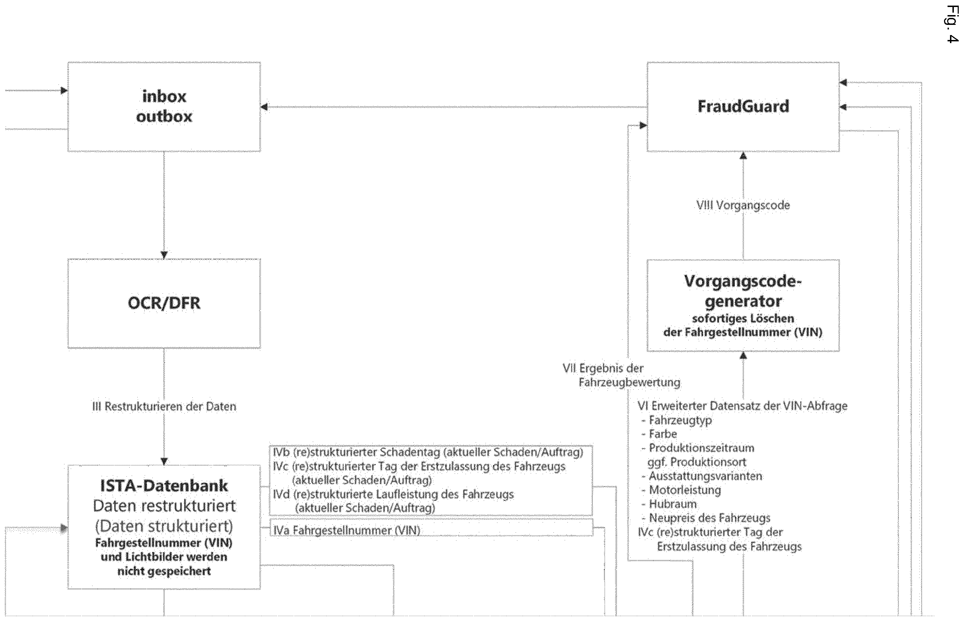

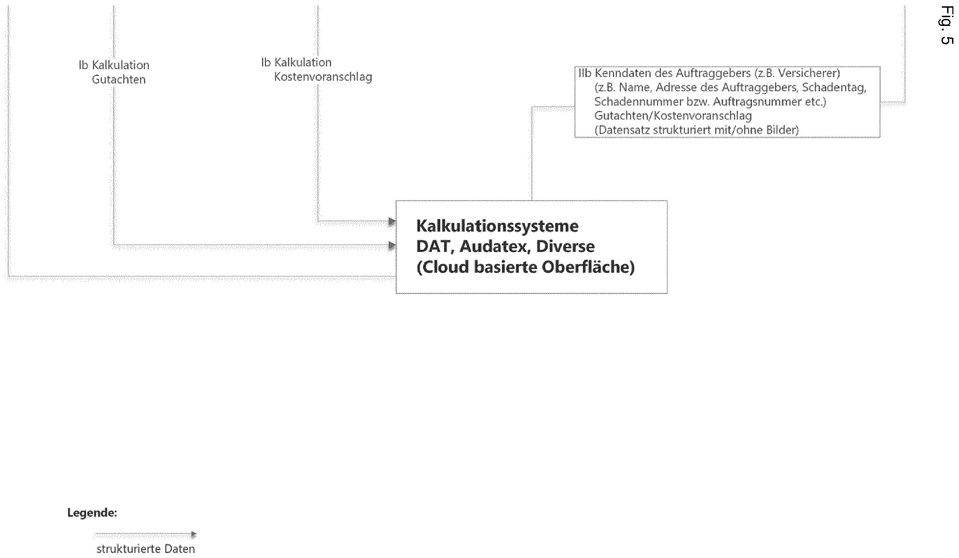

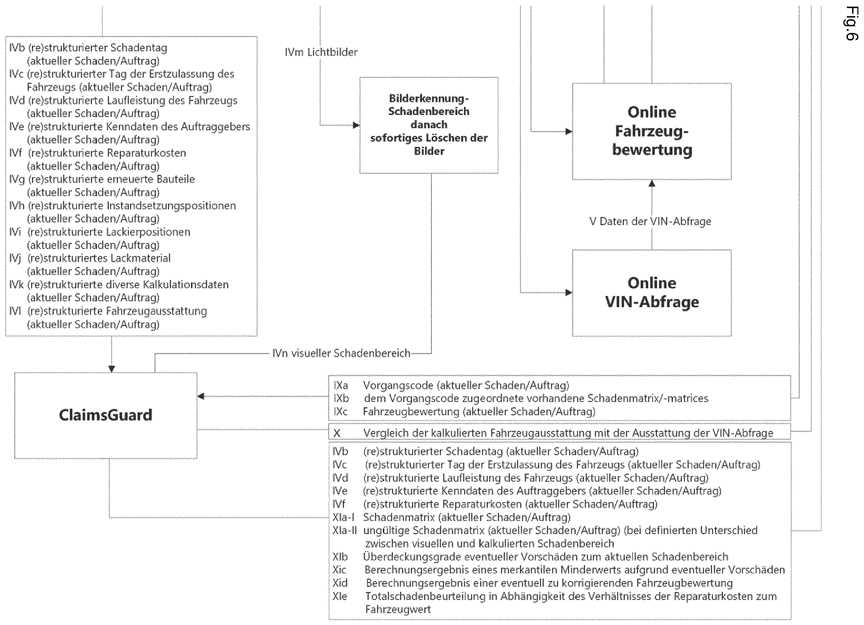

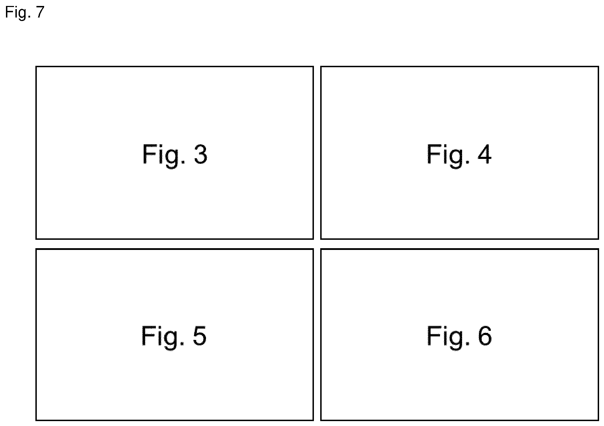

Die Figuren 3 bis 6 sind Vergrößerungen der Figuren 1 und 2 zum Zwecke der besseren Lesbarkeit, in Figur 7 wird ein Schema zum korrekten Zusammensetzen der Figuren wiedergegeben.

In den Figuren wird dargestellt, dass ein Mitarbeiter eines Sachverständigenbüros bzw. einer Sachverständigenorganisation mit einer Kalkulationssoftware ein Gutachten zum beschädigten Kraftfahrzeug erstellt und es auf dem Postweg oder als Anhang einer E-Mail an den Versicherer als Auftraggeber versendet. Es ist auch möglich, dass die Übersendung von einer Rechtsanwaltskanzlei oder vom Anspruchsteller erfolgt, falls dieses Gutachten vorab dorthin gelangt ist. Dieses Gutachten besteht in der Regel aus einer ausgedruckten Kalkulation, Textpassagen und einer Lichtbildanlage (Papier). Bei elektronischem Versand kann es auch eine Datei sein (PDF). Beim Versicherer werden diese Papierausdrucke, Lichtbilder und PDF eingescannt.

Alternativ dazu erstellt ein Mitarbeiter einer Reparaturwerkstatt mit einer Kalkulationssoftware einen Kostenvoranschlag und versendet diesen auf dem Postweg oder als Anhang einer E-Mail an den Versicherer als Auftraggeber. Es ist auch möglich, dass die Übersendung von einer Rechtsanwaltskanzlei oder vom Anspruchsteller erfolgt, falls dieser Kostenvoranschlag vorab dorthin gelangt ist. Dieser Kostenvoranschlag besteht in der Regel aus einer ausgedruckten Kalkulation mit einer Lichtbildanlage (Papier). Bei elektronischem Versand kann es auch eine Datei sein (PDF). Beim Versicherer werden diese Papierausdrucke, Lichtbilder und PDF eingescannt.

In einem weiteren Schritt sendet der Versicherer als Auftraggeber diese eingescannten Vorgänge und entsprechende Lichtbilder (falls vorhanden) über eine gesicherte Verbindung (z.B. GDV-Datensatz) zu dem die Daten verarbeitenden Unternehmen. Dort wird der Vorgang in der Eingangs- und Ausgangseinheit angenommen. Damit werden die Daten gemäß der Schritte a) und b) des erfindungsgemäßen Verfahrens aufgenommen.

Die auch als "ClaimsGuard" bezeichnete Anspruchsüberwachung hat im Rahmen der vorliegenden Erfindung die Aufgabe, einen Totalschaden durch Vergleich des Fahrzeugwertes mit den Reparaturkosten zu ermitteln. Ferner wird der merkantile Minderwert eventuell vorhandener Vorschäden aus den Parametern Fahrzeugalter zum Schadentag und den Reparaturkosten des Vorschadens ermittelt. Die Anspruchsüberwachung erstellt zudem eine Schadenmatrix zum aktuell zu bearbeitenden Vorgang durch Identifikation der ausgelesenen Fahrzeugteile in Verbindung mit Erneuerung oder Instandsetzung derselben. Die Anspruchsüberwachung vergleicht zudem den visuellen Schadenbereich mit den Kalkulationsdaten und die kalkulierte Fahrzeugausstattung mit der Ausstattung gemäß VIN-Abfrage. Schließlich vergleicht die Anspruchsüberwachung eventuell vorhandene Schadenmatrices mit der aktuellen Schadenmatrix des zu bearbeitenden Vorgangs und definiert Überdeckungsgrade.

Nachfolgend wird nun eine konkrete Ausführungsform der Erfindung exemplarisch anhand der Figuren erläutert, wobei sich die römischen Ziffern auf die Figuren beziehen.

Ein Sachverständigenbüro / -organisation oder eine Werkstatt erstellt ein Gutachten bzw. Kostenvoranschlag in einer Kalkulationssoftware, welche nicht Cloud-basiert ist, und versendet das Gutachten / den Kostenvoranschlag (Format unstrukturiert; Papier, PDF, etc.) mit oder ohne Bilder an den Auftraggeber (la).

Alternativ erstellt ein Sachverständigenbüro / -organisation oder eine Werkstatt ein Gutachten bzw. Kostenvoranschlag in einer Cloud-basierten Kalkulationsoberfläche und versendet das Gutachten / den Kostenvoranschlag (Format strukturiert) mit oder ohne Bilder an den Auftraggeber (Ib).

Der Auftraggeber sendet den Auftrag unstrukturiert (Papier, PDF, etc.) (Ila), d.h. das Gutachten / den Kostenvoranschlag (Format unstrukturiert) mit oder ohne Bilder mit Kenndaten des Auftraggebers (Format unstrukturiert; z.B. Name, Adresse des Auftraggebers, Schadentag, Schadennummer bzw. Auftragsnummer, etc.) an den Dienstleister.

Alternativ sendet der Auftraggeber den Auftrag strukturiert aus einer Cloud-basierten Kalkulationsoberfläche (Ilb), d.h. das Gutachten / den Kostenvoranschlag (Datensatz strukturiert) mit oder ohne Bilder mit Kenndaten des Auftraggebers (Datensatz strukturiert; z.B. Name, Adresse des Auftraggebers, Schadentag, Schadennummer bzw. Auftragsnummer, etc.) an den Dienstleister.

Der Dienstleister nimmt den Auftrag unstrukturiert (Papier, PDF, etc.) (Ila), d.h. das Gutachten / den Kostenvoranschlag (Format unstrukturiert) mit Kenndaten des Auftraggebers (Format unstrukturiert; z.B. Name, Adresse des Auftraggebers, Schadentag, Schadennummer bzw. Auftragsnummer, etc.) in einer Inbox / Outbox an.

Der Dienstleister restrukturiert die Daten der unstrukturierten Formate (Ila) durch eigene Software (OCR/DFR) und sendet einen restrukturierten Datensatz (III) an die ISTA-Datenbank.

Alternativ nimmt der Dienstleister den Auftrag strukturiert (IIb), d.h. das Gutachten / den Kostenvoranschlag (Format strukturiert) mit Kenndaten des Auftraggebers (Format strukturiert; z.B. Name, Adresse des Auftraggebers, Schadentag, Schadennummer bzw. Auftragsnummer, etc.) in der Ista-Datenbank an.

Der Dienstleister sendet die (re)strukturierte VIN (IVa) aus der ISTA-Datenbank an eine Online VIN-Abfrage und sendet einen (re)strukturierten Schadentag (akt. Schaden/Auftrag) (IVb), einen (re)restrukturierten Tag der Erstzulassung des Fahrzeugs (aktueller Schaden/Auftrag) (IVc), eine (re)strukturierte Laufleistung des Fahrzeugs (aktueller Schaden/Auftrag) (IVd) aus der ISTA-Datenbank an eine Online Fahrzeugbewertung.

Der Dienstleister sendet den (re)strukturierten Schadentag (akt. Schaden/Auftrag) (IVb), den (re)restrukturierten Tag der Erstzulassung des Fahrzeugs (aktueller Schaden/Auftrag) (IVc), die (re)strukturierte Laufleistung des Fahrzeugs (aktueller Schaden/Auftrag) (IVd), die (re)strukturierten Kenndaten des Auftraggebers (aktueller Schaden/Auftrag) (IVe), die (re)strukturierten Reparaturkosten (akt. Schaden/Auftrag) (IVf) aus der ISTA-Datenbank an die Anspruchsüberwachung.

Zusätzlich kann der Dienstleister (re)strukturierte erneuerte Bauteile (aktueller Schaden/Auftrag) (IVg), (re)strukturierte Instandsetzungspositionen (aktueller Schaden/Auftrag) (IVh), (re)strukturierte Lackierpositionen (akt. Schaden/Auftrag) (IVi), (re)strukturiertes Lackmaterial (akt. Schaden/Auftrag) (IVj), (re)strukturierte diverse Kalkulationsdaten (aktueller Schaden/Auftrag) (IVk), (re)strukturierte Fahrzeugausstattung (aktueller Schaden/Auftrag) (IVI) aus der ISTA-Datenbank an die Anspruchsüberwachung senden.

Ferner kann der Dienstleister restrukturierte oder strukturierte Lichtbilder (IVm) aus der ISTA-Datenbank an die Bilderkennung Schadenbereich senden, wo nach Generierung des visuellen Schadenbereichs ein sofortiges Löschen der Bilder erfolgt. Der Dienstleister kann dann einen visuellen Schadenbereich (IVn) aus der Bilderkennung an die Anspruchsüberwachung senden.

Der Dienstleister sendet die Daten der VIN-Abfrage (V) aus der Online VIN-Abfrage an eine Online Fahrzeugbewertung und sendet ferner einen erweiterten Datensatz der VIN-Abfrage (VI) mit (re)restrukturiertem Tag der Erstzulassung des Fahrzeugs (IVc) aus der Online Fahrzeugbewertung an den Vorgangscodegenerator. Dort erfolgt durch Verarbeitung dieser Daten die Erstellung des Vorgangscodes. Danach erfolgt ein sofortiges Löschen der VIN.

Zusätzlich kann der Dienstleister das Ergebnis der Fahrzeugbewertung (VII) aus der Online Fahrzeugbewertung an die Betrugsüberwachung senden.

Der Dienstleister sendet den Vorgangscode (VIII) aus dem Vorgangscodegenerator an die Betrugsüberwachung und sendet den Vorgangscode (aktueller Schaden/Auftrag) (IXa) von der Betrugsüberwachung an die Anspruchsüberwachung.

Zusätzlich kann der Dienstleister sämtliche dem Vorgangscode zugeordnete Schadenmatrix/-matrizes (IXb) und die Fahrzeugbewertung (aktueller Schaden/Auftrag) (IXc) von der Betrugsüberwachung an die Anspruchsüberwachung senden.

Der Dienstleister sendet den (re)strukturierten Schadentag (aktueller Schaden/Auftrag) (IVb), den (re)strukturierten Tag der Erstzulassung des Fahrzeugs (aktueller Schaden/Auftrag) (IVc), die (re)strukturierte Laufleistung des Fahrzeugs (aktueller Schaden/Auftrag) (IVd), die (re)strukturierten Kenndaten des Auftraggebers (aktueller Schaden/Auftrag) (IVe) die (re)strukturierten Reparaturkosten (aktueller Schaden/Auftrag) (IV f) von der Anspruchsüberwachung an die Betrugsüberwachung.

Zusätzlich kann der Dienstleister einen Vergleich zwischen der kalkulierten Fahrzeugausstattung und der Ausstattung laut VIN-Abfrage (X) von der Anspruchsüberwachung an die Betrugsüberwachung senden. Ferner kann der Dienstleister eine Schadenmatrix (aktueller Schaden/Auftrag) (XIa-I), eine ungültige Schadenmatrix (aktueller Schaden/Auftrag) (bei definierten Unterschied zwischen visuellen und kalkulierten Schadenbereich (XIa-II), Überdeckungsgrade eventueller Vorschäden zum aktuellen Schadenbereich (Xlb), ein Berechnungsergebnis eines merkantilen Minderwerts aufgrund eventueller Vorschäden (Xlc), ein Berechnungsergebnis einer eventuell zu korrigierenden Fahrzeugbewertung (Xld), eine Totalschadenbeurteilung in Abhängigkeit des Verhältnisses der Reparaturkosten zum Fahrzeugwert (XIe) von der Anspruchsüberwachung an die Betrugsüberwachung senden.

Der Dienstleister sendet den (re)strukturierten Schadentag (aktueller Schaden) (IVb), den (re)strukturierten Tag der Erstzulassung (IVc), die (re)strukturierte Laufleistung des Fahrzeugs (aktueller Schaden) (IVd), die (re)strukturierten Kenndaten des Auftraggebers (aktueller Schaden) (IVe), die (re)strukturierten Reparaturkosten (aktueller Schaden) (IVf), Information(en) zu eventuellen Vorschäden (incl. Kenndaten der entsprechenden Auftraggeber), welche ggf. in der Betrugsüberwachung (auch als "FraudGuard" bezeichnet) unter demselben Vorgangscode vorhanden sind (XIId-III), Schadentage der jeweiligen eventuellen Vorschäden (Xlle), Laufleistungen des Fahrzeugs zu den jeweiligen eventuellen Vorschäden (Xllf), Reparaturkosten der jeweiligen eventuellen Vorschäden (Xllg) von der Betrugsüberwachung über eine Inbox / Outbox an den Auftraggeber.

Zusätzlich kann der Dienstleister eine Fahrzeugbewertung des beschädigten Fahrzeugs zum aktuellen Schadentag unter Berücksichtigung evtl. Korrekturmaßnahmen (Xlla), eine Totalschadenbeurteilung zum aktuellen Schaden mit Angabe des Verhältnisses von Reparaturkosten zum Fahrzeugwert (Xllb), einen Vergleich der kalkulierten Ausstattungsvarianten mit den Angaben zur Ausstattung der VIN-Abfrage (Xllc), eine Vorschadeninformationen incl. Kenndaten der jeweiligen Auftraggeber und entsprechenden Überdeckungsgraden zum aktuellen Schadenbild, falls diese in der Betrugsüberwachung unter demselben Vorgangscode vorhanden sind (XIId-I), Vorschadeninformationen incl. Kenndaten der jeweiligen Auftraggeber und Hinweis auf ungültige Schadenmatrices (bei definierten Unterschied zwischen visuellen und kalkulierten Schadenbereichen) (XIId-II), Fahrzeugwerte des Fahrzeugs zu den jeweiligen eventuellen Vorschäden (Xllh), Totalschadenbeurteilungen des Fahrzeugs zu den jeweiligen eventuellen Vorschäden (Xlli) von der (Betrugsüberwachung über eine Inbox / Outbox an den Auftraggeber senden.

Die vorliegende Erfindung weist eine große Zahl an Vorteilen und Erleichterungen auf, die nachstehend noch einmal zusammengefasst werden. Da zum heutigen Zeitpunkt nicht alle regulierten Schadenfälle in Verbindung mit personenbezogenen oder personenbeziehbaren Daten über einen längeren oder gar unbefristeten Zeitraum aus datenschutzrechtlichen Gründen gespeichert werden dürfen oder aus sonstigen Gründen (z.B. extreme Rückstandsbearbeitung, nur Vorgänge ohne Reparaturnachweis, ...) von den Sachbearbeitern der regulierenden Versicherer nicht in die autorisierte Datenbank der informa HIS GmbH (Hinweis- und Informationssystem) eingepflegt werden und damit nur ein Bruchteil der tatsächlich regulierten Schäden dokumentiert ist, war eine unkomplizierte automatisierte Lösung dieser Problematik erforderlich.

Diese Lösung erfolgt durch die vorliegende Erfindung und der daraus resultierende FraudGuard, welche in Kombination mit dem ClaimsGuard folgende Lösungen bietet:
- Durch den vom ClaimsGuard generierten erfindungsgemäßen Vorgangscode wird erstmals ein eindeutiges und datenschutzkonformes Archivierungsmerkmal zu einem Fahrzeug geschaffen, unter welchem alle regulierten Unfallschäden (Vorschäden) im FraudGuard System gespeichert werden dürfen, die im Lauf seiner Verwendung (Erstzulassung bis zur Entsorgung) angefallen sind. Die Fahrgestellnummer (VIN) des Fahrzeugs wäre als Archivierungsmerkmal theoretisch genauso prädestiniert, sie kann jedoch nicht als Archivierungsmerkmal verwendet werden, da sie vom Datenschutz als personenbezogen bzw. als personenbeziehbar definiert wird.
- Der FraudGuard muss nicht von Dritten (Sachbearbeiter der regulierenden Versicherer) aufwändig befüllt werden, da sich das System die erforderlichen Daten selbständig erfasst.
- Da der FraudGuard mit Hilfe des ClaimsGuard die Schadenumfänge aller bekannten Vorschäden analysiert und diese mit der zur Vorschadenerkennung eingereichten aktuellen Reparaturkalkulation vergleicht, zeigt es den Anteil der überdeckten beschädigten Bauteile zwischen allen Schadenbildern. Weiterhin zeigt es die exakten Schadenzonen der Vorschäden und des aktuell zu prüfenden Schadenfalls am beschädigten Fahrzeug den Überdeckungsgrad des aktuellen Schadenbildes über die gespeicherten Vorschäden. Darüber hinaus gibt der FraudGuard Hinweise zur Bedenklichkeit der bekannten Vorschäden im Zusammenhang mit dem aktuell beauftragten Schadenfall.
   - Im FraudGuard werden durch den ClaimsGuard die Wertminderungen aller bekannten Vorschäden zum Schadenzeitpunkt der Reparaturkalkulation, welche aktuell zur Vorschadenerkennung eingereicht wurden, berechnet. So gelingt es, einen aktuell geforderten Wertminderungsanspruch korrekt zu bewerten und dessen reale Höhe zu berechnen.

Da auch den Endverbrauchern zum heutigen Zeitpunkt keine datenschutzkonforme Lösung angeboten wird, welche sie beim Kauf eines gebrauchten Fahrzeugs vor verschwiegenen Vorschäden schützt, sollte auch hier eine entsprechende Lösung gefunden werden.
- Der FraudGuard kann neben Fachleuten und Versicherern auch von Verbrauchern genutzt werden und bewahrt diese davor, ein Fahrzeug mit verschwiegenen Vorschäden zu erwerben.
- Der FraudGuard kann durch ihre erlaubte uneingeschränkte Archivierungsart und Archivierungsdauer und durch ihre präzise Bestimmung der Kalkulationszeitpunkte der Vorschäden unschuldige Dritte vor falschen Betrugsverdachtsmomenten schützen.
- Der FraudGuard kann einen Gesamtwertminderungsbetrag aller bekannten Vorschäden zum Kaufzeitpunkt aufzeigen. Dadurch erhalten Verbraucher, welche auch ein Fahrzeug ohne Unfallfreiheit erwerben wollen, eine Richtlinie für ihre Preisverhandlung beim Kauf.

Die vorliegende Erfindung bietet darüber hinaus weitere Optionen:
- Der ClaimsGuard prüft den angeführten Wiederbeschaffungswert und korrigiert diesen ggf. durch eine Fahrzeugbewertung nach DAT und unter Berücksichtigung der Minderwertansprüche zum aktuellen Schadentag aus den bekannten Vorschäden.
- Der ClaimsGuard prüft, ob eine Abrechnung über die Fahrzeugwerte eine wirtschaftliche Alternative zu denen der zur Vorschadenerkennung eingereichten Reparaturkalkulation angeführten Reparaturkosten darstellen könnte.
- Der ClaimsGuard prüft den angeführten Restwert des beschädigten Fahrzeugs durch automatisierte Einstellung in diversen Restwertbörsen.
- Der ClaimsGuard ermittelt einen Restwert des beschädigten Fahrzeugs durch automatisierte Einstellung in diversen Restwertbörsen, falls kein Restwert im zur Vorschadenerkennung eingereichten Gutachten angeführt ist, aber eine Restwertabrechnung angebracht ist.
- Der ClaimsGuard untersucht die zur Vorschadenerkennung eingereichte Reparaturkalkulation auf fachliche Fehler und zeigt fragwürdige Kalkulationspositionen automatisiert auf.
- Der ClaimsGuard empfiehlt eine fachliche Tiefenprüfung der zur Vorschadenerkennung eingereichten Reparaturkalkulation, falls sich ausreichende fachliche Korrekturoptionen anbieten.
- Der ClaimsGuard prüft die im zur Vorschadenerkennung eingereichten Gutachten angeführte Reparaturdauer und korrigiert sie ggf. automatisch.
- Der ClaimsGuard kann optional eine Berechnung der zur Vorschadenerkennung eingereichten Reparaturkalkulation auf fiktiver Basis (mit Werkstattvergleich) durchführen.

Anhand der nachstehenden Beispielfälle werden die Vorteile der vorliegenden Erfindung weiter erläutert.

Abgesehen des vorstehend schon angesprochenen Vorteils, dass in der heutigen Zeit ohne Einsatz einer entsprechenden Überwachung in Europa aus datenschutzrechtlichen Gründen nicht alle Vorschäden erkannt werden können, bietet der Einsatz des FraudGuard auch eine immense Einsparung an Bearbeitungszeit zur Erkennung und Bewertung aller Vorschäden.

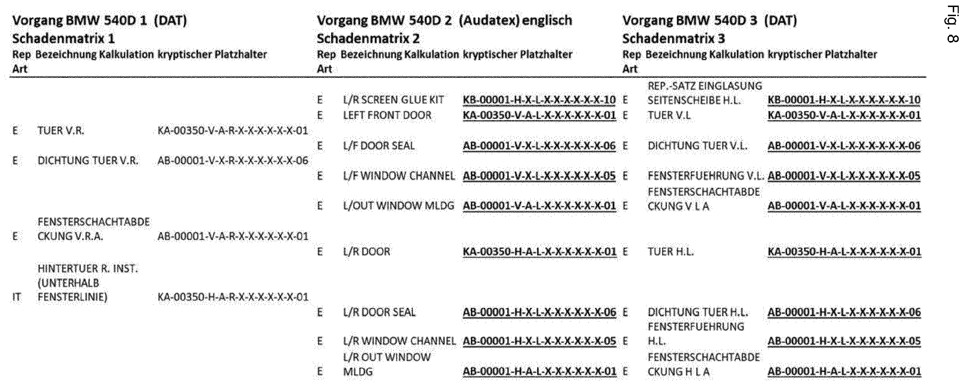

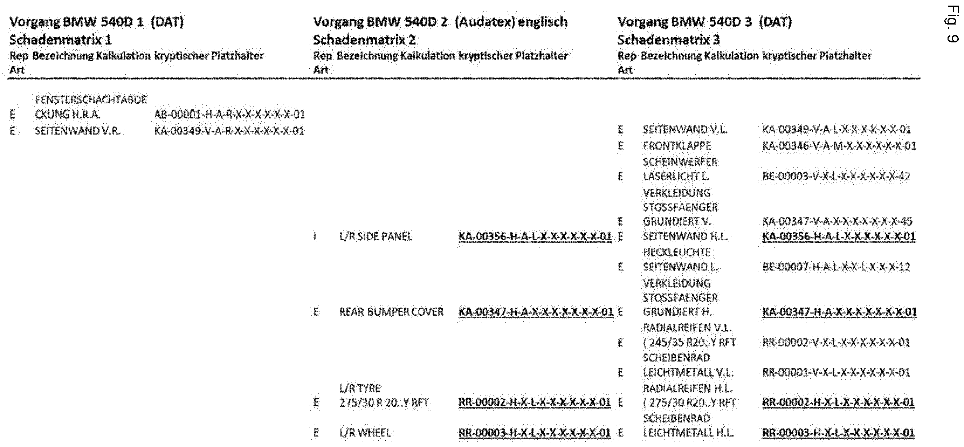

Die drei in den Figuren 8 und 9 zweigeteilt wiedergegebenen Tabelle aufgeführten Beispiele BMW 540D 1, BMW 540D 2 und BMW 540D 3 liegen beispielsweise innerhalb der maximal erlaubten Aufbewahrungsfrist bzw. Speicherfrist von zwei Jahren. Bei Unterstellung, dass die Vorgänge BMW 540D 1 und BMW 540D 2 beide nicht repariert bzw. keine entsprechenden Reparaturrechnungen vorgelegt wurden und die bearbeitenden Sachbearbeiter der regulierenden Versicherer diese Vorgänge in die Datenbank HIS gemeldet haben, sind diese dort auch abrufbar.

Zunächst stellt ein Mitarbeiter des regulierenden Versicherers, welcher den Vorgang BMW 540D 3 bearbeitet, unter Eingabe der Fahrgestellnummer (VIN) des beschädigten Fahrzeuges eine Anfrage an die Datenbank HIS.

Von dort wird der regulierende Versicherer von Vorgang BMW 540D 3 die Auskunft bekommen, dass zwei Vorschäden gespeichert sind. Die Auskunft beinhaltet zwar die regulierenden Versicherer und entsprechenden Schadennummern, eine Angabe des Schadenbereichs oder sogar eines Überdeckungsgrads der Schäden erfolgt hingegen nicht.

Nach einer Wartezeit von mindestens drei bis fünf Arbeitstagen können dann die Schadenakten von den Vorgängen BMW 540D 1 und BMW 540D 2 einem Sachverständigen des regulierenden Versicherers von Vorgang BMW 540D 3 zur Überprüfung vorliegen.

Nun muss der Sachverständige alle drei Schadenakten querlesen und feststellen, welche Bauteile aus diesen drei Schadenfällen mehr als einmal kalkuliert wurden. Hierbei ist nicht nur höchste Konzentration erforderlich, sondern auch eine gute Interpretationsfähigkeit. Es besteht nämlich die Problematik, dass unterschiedliche Kalkulationsanbieter für dasselbe Bauteil unterschiedliche Bezeichnungen verwenden. Meist sind es darüber hinaus sogar recht unverständliche Abkürzungen und wenn es ganz schlimm kommt auch noch in einer Fremdsprache.

So wird beispielsweise die "Schachtleiste Tür hinten außen links" bei Audatex deutsch "SCHACHTLEISTE H L A", bei Audatex englisch "L/R OUT WINDOW MLDG" und bei DAT deutsch "FENSTERSCHACHTABDECKUNG V L A" genannt.

Bei vollster Konzentration und Fremdsprachenkenntnissen wird ein hochbegabter Sachverständiger zum Aktenstudium und zum Vergleich der Vorgänge BMW 540D 1, BMW 540D 2 und BMW 540D 3 mindestens drei Stunden benötigen.

Die entsprechenden Berechnungen der Minderwerte der Vorschäden BMW 540D 1 und BMW 540D 2 und die daraus resultierende Korrektur des Wiederbeschaffungswertes des aktuellen Schadens BMW 540D 3 sowie die letztliche Minderwertberechnung des Schadens BMW 540D 3 werden nochmals ca. zwei Stunden Bearbeitungszeit erfordern.

Die Beurteilung der fachlichen Fehler des Vorgangs BMW 540D 3, welche der ClaimsGuard aufgezeigt hatte, wäre diesem Sachverständigen durchaus schwergefallen oder gar unmöglich gewesen, da es sich bei dieser Fehlerfeststellung um ein Alleinstellungsmerkmal der vorliegenden Erfindung und des daraus sich ergebenden ClaimsGuard handelt.

Die Tabelle 1 mit den Schadenmatrices der Fälle BMW 540D 1, BMW 540D 2 und BMW 540D 3 wird der besseren Lesbarkeit wegen in den Figuren 8 und 9 zweigeteilt dargestellt. In dieser Tabelle sind der aktuelle Schadenfall (BMW 540D 3) sowie die beiden erkannten Vorschäden (BMW 540D 1 und BMW 540D 2) gegenübergestellt. In der entsprechenden Spalte sind alle Bauteile des jeweiligen Schadens angeführt, welche entweder erneuert oder instandgesetzt wurden. Die erneuerten Bauteile sind mit einem E und die instandgesetzten Bauteile sind mit einem I markiert. Neben der Bezeichnung des Bauteils, welche durchaus in unterschiedlichen Sprachen angeführt sind, steht der erfindungsgemäße Vorgangscode als kryptischer Platzhalter, der sprachenunabhängig immer derselbe ist. Bei den Bauteilen, welche im aktuellen Schadenfall und in einem oder beiden Vorschäden beschädigt sind, ist die Schriftfarbe des kryptischen Platzhalters schwarz - fett mit Unterstrich. Bei beschädigten Bauteilen, die nur in einem Schadenfall vorkommen, ist die Schriftfarbe schwarz (normal).

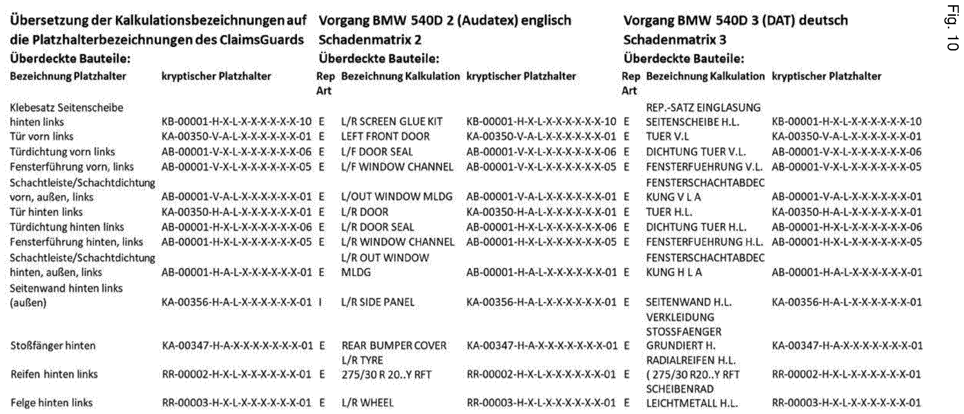

Tabelle 2 in Figur 10 stellt eine Auswertung der Tabelle 1 dar. In dieser Übersicht sind nur die Bauteile angeführt, welche in allen Schadenfällen beschädigt wurden. Da im Schadenfall BMW 540D 1 (Vorschaden 1) ausschließlich die rechte Fahrzeugseite betroffen war, hatte dieser Schaden kein gemeinsam beschädigtes Bauteil mit dem aktuellen Schadenfall BMW 540D 3. Somit ist der Schadenfall BMW 540D 1 nicht in dieser Tabelle angeführt. Schadenüberdeckungen liegen lediglich bei den Schäden BMW 540D 2 (Vorschaden 2) und BMW 540D 3 (aktueller Schaden) vor. In der linken Spalte ist die normierte Bauteilbezeichnung angeführt.

Zusammengefasst werden beim Vorgang BMW 540D 3 ca. drei bis fünf Arbeitstage vergehen, bis nach einem weiteren Arbeitstag unter erheblichen Kosten für den bearbeitenden Sachverständigen die vorhandenen Vorschäden und deren Bewertung in die Bearbeitung dieses Schadenfalls einfließen. Bis dahin können alle Beweise, welche man durch eine schnelle und gezielte Nachbesichtigung des beschädigten Fahrzeugs erlangen könnte, bereits vernichtet sein, falls das beschädigte Fahrzeug unterdessen repariert werden wurde.

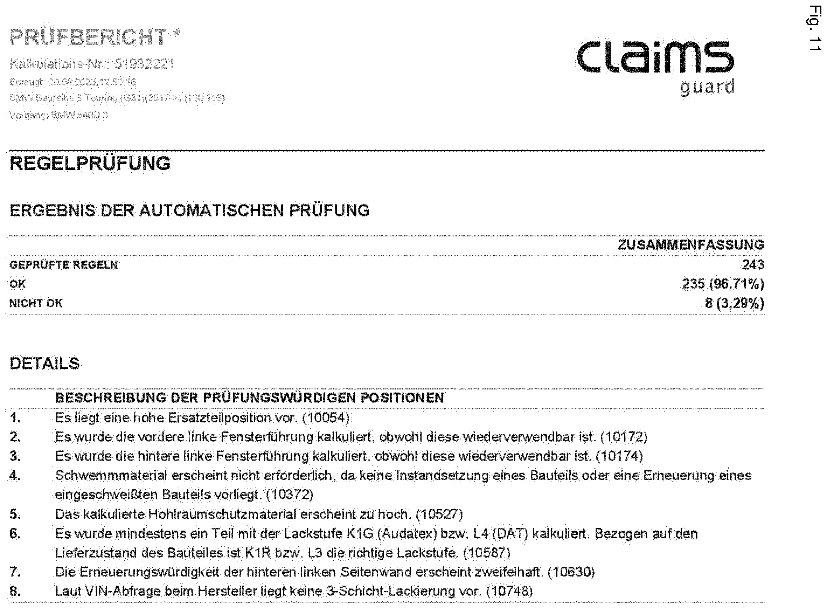

Demgegenüber wird erfindungsgemäß der Prüfbericht des FraudGuard für den zur Vorschadenerkennung eingereichten Vorgang BMW 540D 3 beim regulierenden Versicherer mit allen Informationen, Berechnungen und Handlungsempfehlungen spätestens eine Stunde nach der Auftragserteilung zu äußerst moderaten Kosten eintreffen. Ein solcher Antwortbericht ist beispielhaft im Figur 11 dargestellt.

## Patentansprüche

1. Verfahren zur Bearbeitung und Überwachung von Kraftfahrzeug-Schadenfällen, umfassend die Schritte
a) Annehmen eines technischen Gutachtens zu einem an einem beschädigten Kraftfahrzeug vorliegenden Schaden in Verbindung mit einem Auftraggeber,
b) Annehmen eines Kostenvoranschlags zu dem an dem beschädigten Kraftfahrzeug vorliegenden Schaden in Verbindung mit einem Auftraggeber,
wobei zumindest eines der beiden Dokumente technisches Gutachten und Kostenvoranschlag die Fahrzeugidentifikationsnummer des beschädigten Kraftfahrzeugs enthält,
c) Umwandeln der Daten des technischen Gutachtens und des Kostenvoranschlags in ein maschinenlesbares Format und damit Erzeugen von maschinenlesbaren Daten, wobei zumindest die Fahrzeugidentifikationsnummer und/oder personenbezogene Daten in diesem Schritt nicht dauerhaft gespeichert werden,
d) automatisiertes Abfragen der fahrzeugspezifischen Daten mittels der Fahrzeugidentifikationsnummer bei einer Datenbank des Herstellers des beschädigten Kraftfahrzeugs oder bei einem von diesem Hersteller autorisierten Anbieter und Erhalten von dessen fahrzeugspezifischen Daten,
e) automatisiertes Ausgeben zumindest eines Teils der maschinenlesbaren Daten und der fahrzeugspezifischen Daten an eine Anspruchsüberwachung,
f) Übergeben der fahrzeugspezifischen Daten sowie zumindest eines Teils der maschinenlesbaren Daten des beschädigten Kraftfahrzeugs an eine Fahrzeugbewertung und Erhalten einer fahrzeugspezifischen Bewertung,
g) Übergeben der fahrzeugspezifischen Bewertung sowie zumindest eines Teils der maschinenlesbaren Daten des beschädigten Kraftfahrzeugs an einen Vorgangscode-Generator,
h) Erzeugen eines fahrzeugspezifischen Vorgangscodes für das beschädigte Kraftfahrzeug und unverzügliches endgültiges Löschen der Fahrzeugidentifikationsnummer,
i) Übergeben des fahrzeugspezifischen Vorgangscodes an die Betrugsüberwachung und Abgleichen mit dort bereits abgelegten Vorgangscodes auf Übereinstimmung,
j) Ausgeben des fahrzeugspezifischen Vorgangscodes einschließlich Abgleich desselben von der Betrugsüberwachung an die Anspruchsüberwachung und ein dortiges Verknüpfen mit den in Schritt e) empfangenen maschinenlesbaren Daten,
k) Ausgeben der in Schritt j) erhaltenen Verknüpfung und Hinweis auf eventuell weitere unter diesem Vorgangscode bekannte Schadenereignisse an den Auftraggeber.

2. Verfahren nach Anspruch 1, wobei das Verfahren ein computerimplementiertes Verfahren ist, das technische Eingangsdaten aus den Schritten a) und b) in den Schritten c) bis h) rechnergestützt verarbeitet und in den Schritten i) bis k) technische Ausgangsdaten ausgibt.

3. Verfahren nach Anspruch 1 oder 2, ferner umfassend parallel zu Schritt g) Erzeugen eines monetären Ergebnisses der Fahrzeugbewertung und direktes Übergeben an die Betrugsüberwachung.

4. Verfahren nach einem der Ansprüche 1 bis 3, ferner umfassend einen oder mehrere der Schritte
I) Erzeugen einer Schadenmatrix in Verbindung mit dem fahrzeugspezifischen Vorgangscode, und den in Schritt e) empfangenen maschinenlesbaren Daten in Verbindung mit einem Auftraggeber durch die Anspruchsüberwachung und Ausgeben der Schadenmatrix an die Betrugsüberwachung,
m) Vergleich der kalkulierten Ausstattungsvarianten im Gutachten oder im Kostenvoranschlag mit den die Ausstattungsvarianten betreffenden fahrzeugspezifischen Daten der Abfrage der Fahrzeugidentifikationsnummer, um ggf. bei auftretenden Abweichungen eine Korrektur zum Fahrzeugwert vornehmen zu können,
n) Vergleichen der für den fahrzeugspezifischen Vorgangscode erzeugten Schadenmatrix in der Anspruchsüberwachung mit gegebenenfalls für diesen fahrzeugspezifischen Vorgangscode bereits vorhandenen Schadenmatrices und Ausgeben des Vergleichsergebnisses an die Betrugsüberwachung.

5. Verfahren nach einem der Ansprüche 1 bis 4, wobei der fahrzeugspezifische Vorgangscode zumindest die letzten drei Ziffern der Fahrzeugidentifikationsnummer aufweist.

6. Verfahren nach einem der Ansprüche 1 bis 5, wobei in Schritt e) der Teil der maschinenlesbaren Daten eine oder mehrere Kalkulationsdaten umfasst ausgewählt aus Schadentag, Tag der Erstzulassung des beschädigten Kraftfahrzeugs, Laufleistung des beschädigten Kraftfahrzeugs, Kenndaten des Auftraggebers, Reparaturkosten für das beschädigte Kraftfahrzeug.

7. Verfahren nach einem der Ansprüche 1 bis 6, wobei in Schritt d) beim automatisierten Abfragen der Fahrzeugidentifikationsnummer eine oder mehrere Angaben erhalten werden, ausgewählt aus Fahrzeugtyp, Fahrzeugfarbe und - lackierung, Produktionszeitraum, Produktionsort, Ausstattungsvarianten, Neupreis, Hubraum, Motorleistung und diese Angaben in Schritt g) übergeben werden.

8. Verfahren nach einem der Ansprüche 4 bis 7, wobei in Schritt n) beim Erzeugen der Schadenmatrix Informationen hinsichtlich Altschäden und Vorschäden an dem beschädigten Kraftfahrzeug und der Vorgangscode verarbeitet werden sowie optional eine Fahrzeugbewertung und eine Totalschadenbeurteilung vorgenommen werden, wonach ein Vergleich der in allen Schadenmatrices auftretenden Schadenbereiche in der Anspruchsüberwachung erfolgt und somit eine Ermittlung eines Überdeckungsgrads mit eventuell vorhandenen Vorschäden vorgenommen wird, wobei im Fall von vorhandenen Vorschäden auch der Betrag eines merkantilen Minderwertes ermittelt wird.

9. Verfahren nach einem der Ansprüche 1 bis 8, ferner umfassend den Schritt
o) Ausgeben eines digitalen Informationsberichts zum aktuellen Schadenfall für das beschädigte Kraftfahrzeug, wobei die Auswertung zumindest Informationen zu eventuellen früheren Schadenfällen des beschädigten Kraftfahrzeugs in Verbindung mit einem Auftraggeber enthalten und im Falle des Vorliegens solcher früherer Schadenfälle der jeweilige Überdeckungsgrad zum aktuellen Schadenbild angeführt wird.

10. Verfahren nach einem der Ansprüche 3 bis 9, wobei in Schritt n) die Auswertung ferner Informationen zur Laufleistung des beschädigten Kraftfahrzeugs zum Zeitpunkt der Altschäden und/oder Vorschäden enthält, wobei optional eine Fahrzeugbewertung des beschädigten Kraftfahrzeugs unter Einberechnung eines eventuellen Minderwerts aufgrund eventuell vorhandener Vorschäden und/oder eine prozentuale Angabe der Reparaturkosten zum aktuellen Wert des beschädigten Kraftfahrzeugs und eine Totalschadenbeurteilung vorgenommen wird.

11. Verfahren nach einem der Ansprüche 1 bis 10, ferner umfassend den Schritt
p) Erfassen von einem oder mehreren Lichtbildern zur Ermittlung eines visuellen Schadenbereichs des beschädigten Kraftfahrzeugs mittels einer Bilderkennungseinheit und Übermitteln eines digitalisierten Schadenbereichs an die Anspruchsüberwachung, wobei die einen oder mehreren Lichtbilder und/oder personenbezogene Daten in diesem Schritt nicht dauerhaft gespeichert werden,
wobei in der Anspruchsüberwachung die durch die Bilderkennungseinheit erkannten Schäden am beschädigten Kraftfahrzeug mit den in der Kalkulation hinterlegten Schäden verglichen werden und somit das in der Kalkulation angegebene Schadenbild verifiziert werden kann.
